# EUROPÄISCHE PATENTSCHRIFT

(11) **EP 0 309 410 B1**
(45) Veröffentlichungstag und Bekanntmachung des Hinweises auf die Patenterteilung: **01.09.1993**
(21) Anmeldenummer: 88810638.2
(22) Anmeldetag: 19.09.1988
(51) Int. Cl.: B29C 47/10

(54) **Verfahren zur Herstellung einer heisshärtbaren, schmelzbaren Mischung, Anlage zu seiner Durchführung, und zur Verwendung in letzterer geeignete Extrudereinlasskammer**
Process for the manufacture of a heat-curable, meltable mixture, installation for carrying it out and suitable extruder inlet chamber for use in the latter
Procédé pour la fabrication d'un mélange fusible, thermodurcissable, installation pour son exécution et chambre d'admission d'extrudeuse appropriée pour l'utilisation dans cette installation

(30) Priorität: 25.09.1987 CH 3716/87; 06.10.1987 CH 3899/87
(43) Veröffentlichungstag der Anmeldung: 29.03.1989
(73) Patentinhaber: CIBA-GEIGY AG, 4002 Basel (CH)
(72) Erfinder: Wagner, Daniel, Dr., CH-4052 Basel (CH); Mechera, Karl, Dr., CH-4132 Muttenz (CH)

(56) Entgegenhaltungen:
- EP-A- 0 058 101
- DE-A- 1 954 214
- DE-A- 2 126 715
- DE-A- 2 149 242
- DE-A- 2 301 927
- DE-A- 2 404 658
- DE-A- 2 533 195
- DE-A- 3 428 817

## Beschreibung

Die Erfindung betrifft ein Verfahren der im Oberbegriff des Patentanspruchs 1 beschriebenen Art, in einem weiteren Aspekt eine zur Durchführung des erfindungsgemäßen Verfahrens geeignete Anlage, sowie eine zur Verwendung in der genannten Anlage geeignete Extruder-Einlaßkammer.

Vorzugsweise dient das Verfahren nach der Erfindung zur Herstellung von bei Raumtemperatur festen Schmelzmischungen, die ausgehärtet Duroplaste bilden, und insbesondere zur Herstellung sogenannter Reaktiv-Schmelzkleber.

Bisher wurden schmelzbare Mischungen, die auch Dichtungs- und Preßmassen umfassen, hergestellt, indem z.B. in einem Schmelzflußverfahren aus feinstgemahlenem Festharz, gegebenenfalls unter Beimengung von Flüssigharz, Füllstoffen, Farbstoffen, Gleit- und Trennmitteln zunächst ein "Vorgemenge" hergestellt wurde, das dann diskontinuierlich oder kontinuierlich auf Walzwerken oder Extrudern aufbereitet wurde. (Ullmanns Encyklopädie der technischen Chemie, 4. Aufl., Band 14, Seite 414).

Auch werden bei bekannten Herstellungsweisen die Komponenten in beheizten Rührkesseln zusammengeschmolzen und anschließend in Pastillier- oder Granuliereinrichtungen konfektioniert. Dabei muß bei relativ hoher Viskosität die zähviskose Schmelze in kneterähnlichen Rührwerken mit hoher Krafteinwirkung oder in Extrudern weiterverarbeitet werden (Ullmann, wie oben, Band 14, Seite 237).

In der Praxis wird verlangt, daß dem aus Harz und Härter gebildeten System je nach der vom Besteller verlangten Spezifikation noch verschiedene Additivkomponenten beigemischt werden, um der heißhärtbaren, schmelzbaren Mischung alle geforderten Eigenschaften zu erteilen. Solche Additivkomponenten können Härtungsbeschleuniger, Haftvermittler, Weichmacher, reaktive Verdünner, Thixotropiermittel, Vermittler elektrischer Leitfähigkeit und Füllstoffe sein.

In der DE-A-2,533,195 wird ein Extruder zum kontinuierlichen Extrudieren von hitzehärtbaren Harzen offenbart, bei dem die Herstellung von Vormischungen entfällt. Dazu wird der Extruder mit hitzehärtbaren Harzen zusammen mit inerten Zusatzstoffen, wie Füllstoffen oder Weichmachern, direkt beschickt.

In der DE-A-1,954,214 wird ein Verfahren zur Herstellung von Massen offenbart, worin die Komponenten jeweils für sich dosiert werden und die Verarbeitung aller Komponenten in einem einzigen Extruder erfolgt. Die einzelnen Komponenten werden längs des Bearbeitungsweges nacheinander in den Extruder eingeführt.

Hinweise auf die Verarbeitung einer Kombination von hitzehärtbaren Harzen mit Härtern und auf die Probleme, die sich aus der Verarbeitung ergeben, werden in den oben genannten Veröffentlichungen nicht offenbart.

In der DE-A-2-404,658 wird ein Verfahren zum kontinuierlichen Formpressen wärmehärtbarer Harze offenbart, worin eine wärmehärtbare Masse in einem Extruder stranggepreßt wird und die extrudierte Harzmischung in einer Aushärtform unter definierten Bedingungen gehärtet wird.

In dieser Druckschrift, die den Oberbegriff für die unabhängigen Patentansprüche 1, 2 und 19 bildet, sind insbesondere ein Verfahren und eine Vorrichtung zur Herstellung von plattenartigen Gegenständen oder von gepressten Hohlkörpern (Rohren) beschrieben. Dabei wird die Ausgangsharzmasse über einen Einfülltrichter einer Strangpressverformungsmaschine zugeführt, die eine in einem Zylinder angebrachte Extruderschraube umfasst. Die einzelnen Komponenten der Ausgangsharzmasse können gleichzeitig oder nacheinander in den Einfülltrichter eingebracht werden. Es ist auch beschrieben, dass die Komponenten des Ausgangsmaterials im voraus zu einigen Gemischen zusammengemischt werden können und schliesslich über den Einfülltrichter der Strangpressverformungsmaschine zugeführt werden können. Das Ausgangsmaterial wird durch die Rotation der Extruderschraube geknetet und gemischt. Dabei wird das wärmehärtbare Rohmaterial durch die Reibungswärme erwärmt und zum äussersten Endteil des Extruders gefördert. Mit Hilfe einer in der Maschine vorgesehenen Kühleinrichtung wird die Temperatur und die Härtungsreaktion des Rohmaterials gesteuert.

In heisshärtbaren, schmelzbaren Harz- und Härter-Mischungen nach der Erfindung wird als Härtungsmittel ein bei Raumtemperatur nicht aktiver, hitzeaktivierbarer Härter verwendet.

Bei der Zubereitung der nötigen Vorgemenge oder "Vormischungen" nach dem bekannten Verfahren stiess man auf Schwierigkeiten, die erforderliche Rieselfähigkeit aller Komponenten zu erzielen, so dass in der Praxis dem Extruder, der bevorzugt verwendet wurde, Planetenmischer, Siebe, Trommelmischer, Dreiwalzwerke und Knetmaschinen, gegebenenfalls auch Granulatoren vorgeschaltet werden mussten.

Auch war das Schmelzen der Vorgemenge bei Anwesenheit eines hitzeaktiven Härters nur möglich, wenn alle darin vorhandenen festen Komponenten Schmelzpunkte unterhalb der Härtungstemperatur besaßen.

Es ist daher Aufgabe der Erfindung, ein Verfahren unter Zubereitung von Vorgemengen zu schaffen, bei welchem das genannte Endprodukt, das heißhärtbar und schmelzbar sein soll, doch bei der Zubereitung des erforderlichen Vorgemenges nur eine sehr geringe Zahl von Apparaturen benötigt, und gleichwohl das erzielte Endprodukt die geforderten Eigenschaften genau reproduzierbar aufweist. Auch soll das Schmelzen gewisser Komponenten unabhängig von der Härtungstemperatur des Systems erfolgen können.

Diese Aufgabe wird durch die im kennzeichnenden Teil des Patentanspruchs 1 beschriebenen Verfahrensschritte gelöst. Eine zur Durchführung dieses erfindungsgemäßen Verfahrens geeignete Anlage weist die im kennzeichnenden Teil des Anspruchs 19 aufgeführten Merkmale auf, eine bevorzugte Extrudereinlaßkammer in dieser Anlage die Merkmale des kennzeichnenden Teils des Anspruchs 21.

Bevorzugte Ausführungsweisen des Verfahrens nach der Erfindung umfassen mindestens eines der in den Unteransprüchen 2 bis 18 beschriebenen Merkmale. Eine bevorzugte Ausführungsform der Anlage nach Anspruch 19 weist die im kennzeichnenden Teil des Unteranspruchs 2O beschriebene Ableit- und Einfülleinrichtung für das Abfüllen des Endproduktes des erfindungsgemäßen Verfahrens in Gebinde auf. Eine besonders vorteilhafte Ausführungsform der Auslaßdüse für die Schmelze der Vormischung I im Inneren der Extrudereinlaßkammer ist im Unteranspruch 22 beschrieben.

Die als Endprodukte des Verfahrens nach der Erfindung erhaltenen, bei Raumtemperatur festen Extrusionsprodukte sind Mehrkomponentensysteme in denen Harzkomponente und Härter gleichzeitig anwesend sind. Die Härtung der das Endprodukt des erfindungsgemäßen Verfahrens darstellenden heißhärtbaren und schmelzbaren, bei Raumtemperatur festen Mischung kann dann durch Erhitzen bis zur oder über die Härtungstemperatur der Mischung eingeleitet und durch Halten bei dieser Temperatur während einer bestimmten Zeitspanne vervollständigt werden.

Für die Verwendung im Verfahren nach der Erfindung sind als Harzkomponenten besonders die Epoxidharzverbindungen, die in Ullmanns Encycl. der technischen Chemie, wie oben beschrieben, auf Seite 236 aufgeführt sind, geeignet. Insbesondere eignen sich hierzu heisshärtbare Epoxidsysteme, die in der US-PS 3.641.195 und auch in der Europäischen Patentanmeldung Veröffentlichungs-Nr. O15O674 vor allem Seiten 2 und 6 bis 8 beschrieben sind.

Beispiele für Epoxidharzverbindungen sind:
A) Feste Polyglycidyl- und Poly-(β-methylglycidyl)-ester, die beispielsweise durch Umsetzung von einer aromatischen Polycarbonsäure mit Epichlorhydrin, Glycerindichlorhydrin oder mit β-Methylepichlorhydrin in Gegenwart von Basen erhalten werden können.
   Beispiele für aromatische Polycarbonsäuren sind aromatische Dicarbonsäuren, wie Phthal-, Isophthal- oder Terephthalsäure; oder aromatische Tri- oder Tetracarbonsäuren, wie Trimellitsäure, Trimesinsäure, Pyromellitsäure oder Benzophenontetracarbonsäure.
B) Feste Polyglycidyl- und Poly-(β-methylglycidyl)-ether, die beispielsweise durch Umsetzung einer Verbindung enthaltend mindestens zwei phenolische Hydroxylgruppen im Molekül mit Epichlorhydrin, Glycerindichlorhydrin oder mit β-Methylepichlorhydrin unter alkalischen Bedingungen oder in Anwesenheit eines sauren Katalysators und anschliessender Alkalibehandlung erhalten werden können.
   Solche festen Polyglycidylether leiten sich beispielsweise ab von mehrkernigen Polyphenolen, wie Bis-(hydroxyphenyl)-methan (Bisphenol F), 2,2-Bis-(4-hydroxyphenyl)-propan (Bisphenol A), bromierten 2,2-Bis-(4-hydroxyphenyl)-propan, Bis-(4-hydroxyphenyl)-ether, Bis-(4-hydroxyphenyl)-sulfon, 1,1,2,2-Tetrakis-(4-hydroxyphenyl)-ethan oder Novolaken, die durch Kondensation von Aldehyden, wie Formaldehyd, Acetaldehyd, Chloral oder Furfuraldehyd mit gegebenenfalls alkyl- oder halogensubstituierten Phenolen, wie Phenol, den oben beschriebenen Bisphenolen, 2- oder 4-Methylphenol, 4-tert.-Butylphenol, p-Nonylphenol oder 4-Chlorphenol erhältlich sind. Bei diesen Polyglycidylverbindungen kann es sich auch um feste Polyglycidylether handeln, die in einer Vorverlängerungsreaktion durch Umsetzung von Bisphenolen mit flüssigen Polyglycidylethern in an sich bekannter Weise erhältlich sind.
C) Feste Poly-(N-glycidyl)-verbindungen, wie beispielsweise Triglycidylisocyanurat oder N,N'-Diglycidylderivate von Cycloalkylenharnstoffen, wie von Ethylenharnstoff oder von 1,3-Propylenharnstoff.
   Bevorzugt werden feste Diglycidylether auf Bisphenol Basis, insbesondere auf Basis von Bisphenol A, auf Basis von bromiertem Bisphenol A oder auf Basis von Bisphenol F, oder glycidylisierte Novolake, insbesondere Novolake auf Basis von Phenol und Formaldehyd oder Novolake auf Basis von Kresol und Formaldehyd.

Diese Festharze können auch in Kombination mit flüssigen Epoxidharzen, beispielsweise mit flüssigen Diglycidylethern auf Bisphenol Basis, eingesetzt werden.

Als Flexibilatoren können die dem Fachmann auf dem Gebiet der Epoxidharze bekannten Verbindungen eingesetzt werden unter anderem die bei der Verarbeitung duroplastischer Kunststoffe üblichen Weichmacher. Beispiele dafür sind Acrylnitril-Butadien-Copoylmere, Acrylnitril, Polyester und Polyäther. Die Verbindungen erfüllen die an die Endprodukte des erfindungsgemässen Verfahrens gestellten technischen Ansprüche weitgehend, während sie den Härtungsvorgang im allgemeinen nur geringfügig beeinflussen ("Die Kunststoffe und ihre Eigenschaften", von Hans Domininghaus, 2. Aufl., VDI Verlag, D-4OOO Düsseldorf, Seiten 761-762; Römpps Chemie-Lexikon 7. Aufl. "Weichmacher" Seiten 3893-3896).

Haftvermittler sind ebenfalls allgemein in "Die Kunststoffe..." (wie oben) auf Seiten 642 und 643 beschrieben. Bevorzugt sind Silan-Haftvermittler (ebenda).

Beispiele für Weichmacher sind Phthalat- und Adipat-Weichmacher, z.B. Benzylbutylphthalat. Beispiele für reaktive Verdünner sind Phenyl- oder Cresyl-Glycidyläther, Butandioldiglycidyläther oder Hexahydrophthalsäure-Diglycidyläther.

Bei Raumtemperatur nicht aktivierte, aber hitzeaktivierbare Härter sind in "Die Kunststoffe..." (siehe oben) auf Seiten 757, letzte fünf Zeilen bis Seite 760, Zeile 13 beschrieben. Weitere Angaben über erfindungsgemäß verwendbare Härter finden sich in der vorgenannten Europäischen Patentanmeldung, EPA 0150674, auf Seite 9, Zeilen 4-19, soweit die dort genannten Härter bei vorzugsweise 80°C und höher, vorzugsweise nicht über 200°C aktiviert werden und bei Raumtemperatur (20-30°C) fest und nicht aktiviert sind.

Als Härter lassen sich alle dem Fachmann an sich bekannten latenten Härtungs- und Beschleunigungssysteme verwenden, sofern diese pulverförmig sind und eine bei Raumtemperatur ausreichende Reaktionsträgheit aufweisen.

Beispiele dafür sind Dicyandiamid, aromatische primäre Polyamine, wie 4,4'-Diaminodiphenylmethan oder 4,4'-Diaminodiphenylsulfon, oder feste Polycarbonsäureanhydride, wie Phthalsäureanhydrid, Pyromellitsäuredianhydrid, Benzophenontetracarbonsäuredianhydrid oder Trimellitsäureanhydrid.

Als Härtungsbeschleuniger dienen die in der vorgenannten EPA 0150674 auf Seite 9, Zeile 20 bis Seite 10, Zeile 13 beschriebenen Verbindungen.

Weitere geeignete Harnstoff-Härtungsbeschleuniger sind N-(2-Hydroxyphenyl)-N', N'-dimethylharnstoff und 2,4-Bis-(N,N-dimethylureido)-toluol, Imidazole, insbesondere 2-Methylimidazol, 1-Benzyl-2-methylimidazol und 1-Cyanoäthyl-2-methylimidazol, die Salze von tertiären Aminen mit Carbonsäuren oder Phenolen oder Addukte der tertiären Amine mit Epoxidharzen oder Salze dieser Addukte.

Schließlich können in der Vormischung II im Verfahren nach der Erfindung noch Additive eingesetzt werden, die als Füllstoffe reine Streckungsmittel, aber auch Verstärkungsmittel oder Mittel zur Verleihung elektrischer Leitfähigkeit, oder auch eine gewünschte Fließfähigkeit bzw. Thixotropie verleihende Mittel sein können.

So können Textilfasern, Glasfasern, Asbestfasern, Borfasern, Kohlenstoff-Fasern, Calciumcarbonat wie Kreide, Dolomit, mineralische Silikate wie Kaolin, Talk, Wollastonit, Glimmer und andere Alumosilikate, Quarzmehl, pyrogene und gefällte Kieselsäuren und Siliziumdioxid oder Kieselsäureaerogel, Aluminiumoxidhydrat, Bentonite, oder Metallpulver wie Aluminiumpulver oder Eisenpulver, ferner Pigmente und Farbstoffe wie Farbruße, Oxidfarben, Titandioxid, Zinksulfid oder Schwerspat als Füllstoffe in der Vormischung II dienen. Zur Viskositätsanhebung in transparenten heißhartbaren Endprodukten des Verfahrens nach der Erfindung dienen z.B. das erwähnte Aluminiumhydrat oder basisches Zinkcarbonat.

Thixotropie ist bei der handwerklichen Verarbeitung der nach dem erfindungsgemäßen Verfahren hergestellten heißhärtbaren Endprodukte erwünscht, wenn diese z.B. in dickeren Schichten auf stark geneigte oder senkrechte Flächen aufgetragen werden sollen. Thixotropiermittel, die der Vormischung II zugesetzt werden können, umfassen vor allem faserförmige Füllstoffe, bevorzugt pyrogene oberflächenbehandelte, z.B. silanisierte Kieselsäuren. Elektrische Leitfähigkeit wird den Endprodukten des Verfahrens nach der Erfindung durch entsprechende Beimischung von Metallpulvern u. dgl. verliehen. Die vorangehend angegebenen Beispiele für die verschiedenen Arten von Additiven sind nicht als einschränkend zu verstehen, vielmehr fallen alle Substanzen, welche die im Anspruch 1 für diese Additive angegebenen Merkmale erfüllen, darunter.

Weitere Merkmale, Ziele und Vorteile der Anlage zur Durchführung des oben beschriebenen Verfahrens nach der Erfindung ergeben sich aus der folgenden Beschreibung einer bevorzugten Ausführungsform derselben sowie einer besonders vorteilhaften Extrudiereinlaßkammer in dieser Anlage im Zusammenhang mit den beigefügten Zeichnungen, in welchen.
- Fig. 1: die vorerwähnte bevorzugte Ausführungsform der Anlage nach der Erfindung in schematischer Darstellung,
- Fig. 2: eine bevorzugte Ausführungsform der Extrudereinlaßkammer nach der Erfindung im Längsschnitt und
- Fig. 3: die gleiche Ausführungsform der Extrudereinlaßkammer wie in Fig. 2, aber in teilweise aufgeschnittener Draufsicht zeigt.

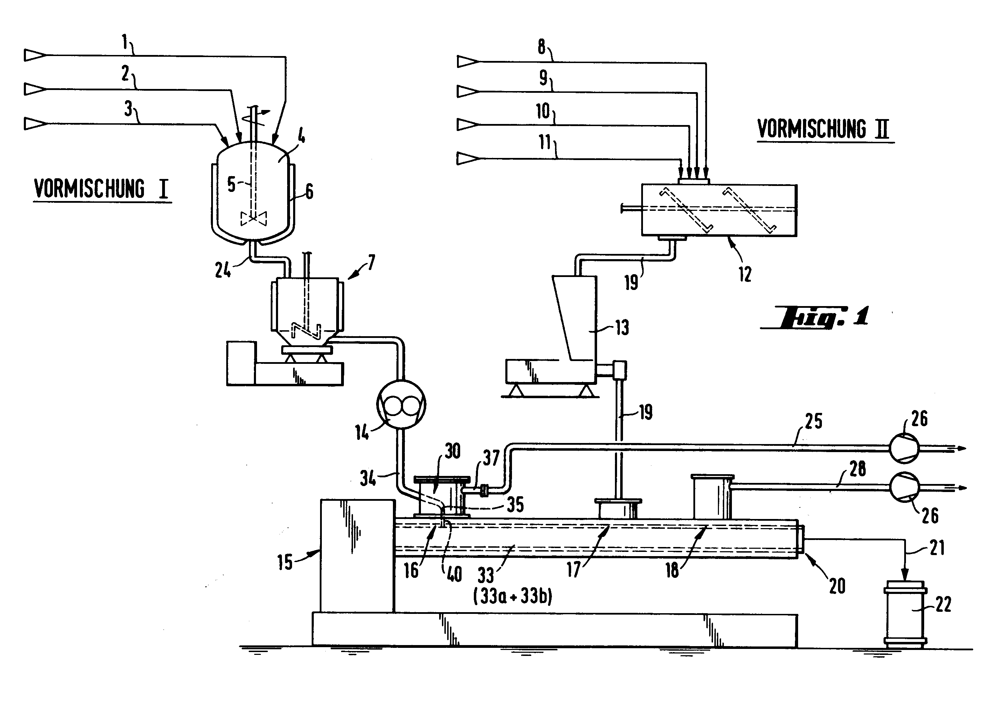

Die in Fig. 1 dargestellte Anlage nach der Erfindung umfaßt einen ersten, links in Fig. 1 gezeigten Produktionszweig zur Zubereitung der Vormischung I und einen zweiten, rechten Zweig zur Zubereitung der Vormischung II . Der erste Produktionszweig umfaßt einen Rührkessel 4 in welchen die Zuleitungen 1 für Festharz, 2 für Flussigharz und 3 für mindestens ein festes schmelzbares oder ein flüssiges Additiv einmünden. Natürlich kann auch eine weitere Zuleitung für ein zweites Additiv vorgesehen sein, usw. Ist, z.B. das durch die Zuleitung 3 eingeführte Additiv flüssig, so kann ein weiteres festes Additiv durch die zusätzliche Zuleitung (nicht gezeigt) in den Kessel 4 eingegeben werden und entsprechend noch andere.

Der Kessel 4 ist mit einer Rührvorrichtung 5 und mit einer Beheizung 6 ausgerüstet. Die Beheizung muß so ausgelegt sein, daß der Kesselinhalt auf Temperaturen von 90 bis 110°C oder auch noch höher gebracht und auf solcher Schmelztemperatur gehalten werden kann, bis im Kessel eine Schmelze hinreichender Fließfähigkeit vorliegt.

Weiter ist der Kessel 4 mit einer üblichen Entgasungseinrichtung versehen. Aus dem Kessel 4 gelangt die gut fließfähige Schmelze über eine beheizbare, gasdicht geschlossene Leitung 24 in die Dosiereinrichtung 7 des ersten Zweiges, vorzugsweise eine Differentialdosierwaage, und von dieser durch eine beheizbare, gasdicht geschlossene Leitung 34, in der erforderlichenfalls eine Zahnradpumpe als Schmelzentransporteinrichtung 14 vorgesehen sein kann, in den weiter unten näher beschriebenen Extruder 15.

Im anderen Produktionszweig befindet sich ein Pulvermischgerät 12, z.B. ein einfacher Pflugscharmischer, in den Zuleitungen 8 für den festen, bei Raumtemperatur nicht aktivierten Härter, 9 für Härtungsbeschleuniger, 10 für Thixotropiermittel oder ein anderes festes Additiv und 11 für Füllstoffe einmünden. Dem Pulvermischer 12 ist eine zweite Dosierwaageneinrichtung 13 nachgeschaltet, in die die Pulvermischung aus dem Mischgerät 12 über eine Rohrleitung 19 gelangt.

Beide Produktionszweige münden in den gemeinsamen Extruder 15 ein. Dieser ist vorteilhafterweise ein Doppelschneckenextruder mit einer ersten, in Förderrichtung stromauf gelegenen Einzugszone 16 und an diese anschließend einer zweiten Einzugszone 17 in einem mittleren Bereich des Förderweges für das Gut, also der Extrudierstrecke durch den Extruder.

Auch weist der Extruder mindestens eine Entgasungszone 18 und ein Auslaßende 20 auf. Die Schneckengeometrie ist vorzugsweise so gewählt, daß beim Anlegen von Vakuum über die Saugleitung 28 an das Extruderinnere vorzugsweise in der Entgasungszone 18 mit Hilfe einer der Vakuumpumpen 26 die Abdichtung des Extruderinneren durch das sich am Extruderauslaßende 20 befindliche Endprodukt des Verfahrens gewährleistet ist.

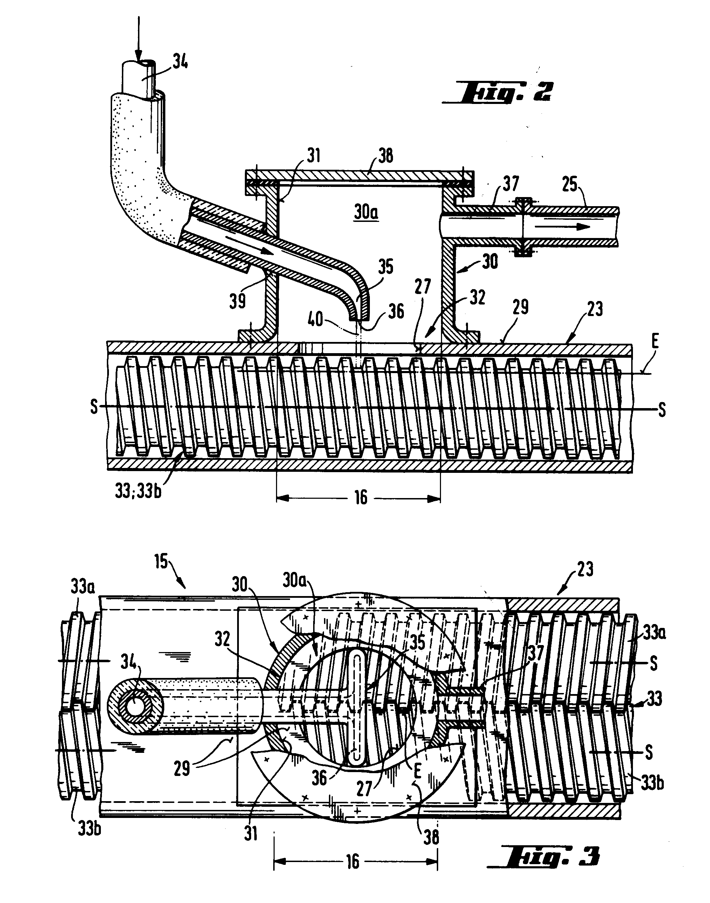

In der ersten, stromauf gelegenen Einzugszone 16 des Extruders befindet sich auf der Extruderoberseite 29 gasdicht montiert eine Einlaßkammer 30, deren Aufbau an Hand der Figuren 2 und 3 im folgenden näher beschrieben wird, und deren Kammerinneres 30a über eine gasdichte Leitung 25 an die zweite Vakuumpumpe 26 angeschlossen ist.

Die in Figuren 2 und 3 dargestellte Einlaß- oder Einspeisungskammer 30 ist gasdicht über der ersten Einzugszone 16 auf der Oberwandung 29 des Extrudergehäuses 23 montiert. Die Wandungen der Kammer 30 umfassen Kammerseitenwände 31 und eine vorzugsweise als oder mit Deckel 38 ausgebildete obere Abschlußwandung. Der Deckel 38 ist in der Abschlußwandung oder auf dem oberen Rand der Kammerseitenwandung 31 gasdicht ein- bzw. aufgesetzt, z.B. mit zwischengelegten Dichtungen verschraubt. An ihrem unteren Ende 32 ist die Kammer 30 offen oder als Durchlaß ausgebildet, der nach unten in eine Einlaßöffnung 27 öffnet, die in der Oberwandung 29 des Extrudergehäuses 23 in der Einzugszone 16 mit dem Durchlaß fluchtend vorgesehen ist. In einer der Kammerseitenwände 31 ist eine Durchtrittsöffnung 39 vorgesehen, in der die Leitung 34 für eine Schmelze oder dergl. fließfähige Masse, mit ihrem als Einlaßrohr ausgebildeten Ende gasdicht eingebaut ist und im Kammerinneren 30a in einer Breitschlitzdüse 35 mündet. Der Düsenauslaß wird durch einen Längsschlitz 36 gebildet, der sich vorzugsweise quer zur Förderrichtung des Extruders 30, d.h. mit seiner Schlitzlängsachse quer zur Schneckenlängsachse S der Doppelschnecke 33 erstreckt.

Die Länge des Düsenschlitzes 36 beträgt dabei vorzugsweise 30 bis 70 und optimal um 40 mm, während die Breite des Schlitzes 36 entsprechend etwa 1 bis 5 mm, vorzugsweise um 2 bis 3 mm beträgt. Aus dem Längsschlitz 36 tritt die Schmelze in Form eines dünnen Gießvorhanges aus und fällt durch den Durchlaß am unteren Ende 32 der Kammer 30 und die mit ihm fluchtende Einlaßöffnung 27 in der Extrudergehäuseoberwandung 29 hindurch auf die Doppelschnecke 33 und wird von den beiden vorzugsweise gleichsinnig drehenden Schnecken 33a,33b erfaßt, deren Umfangsprofile ineinandergreifen. Die Fallhöhe des Gießvorhangs 40 aus dem Schlitz 36 bis zur Einzugsebene zwischen den beiden Schnecken beträgt vorzugsweise 25 bis 35 mm, und am besten nicht mehr als 40 mm. Je nach den Dimensionen der Düse 35 hat der Gießvorhang 40 dabei eine Breite von etwa 30 bis 60, vorzugsweise von 40 bis 60 mm und eine Dicke von 0,5 bis 4, und optimal von 1 bis 2 mm. Die gewünschte Fallhöhe, die auf die Beschaffenheit des Gießvorhanges 40 abgestellt werden kann, kann durch entsprechende Verstellvorrichtungen (nicht gezeigt) in an sich bekannter Art auf das gewünschte Niveau über der Einzugsebene im Extruderinneren eingestellt werden. Neben einer solchen Verstelleinrichtung z.B. in der Kammerseitenwand 31 an der Durchtrittsöffnung 39 für die Einlaßleitung 34, kann in einer der Kammerseitenwandungen 31 auch ein Anschlußstutzen 37 zum Anschließen der Saugleitung 25 einer der Vakuumpumpen 26 vorgesehen sein.

Als vorhangbildende Mittel können anstelle einer Breitschlitzdüse auch andere, z.B. wehrartige Anordnungen, an deren Ueberlaufkante sich ein Giessvorhang bildet, eingesetzt werden. Insbesondere eignet sich eine Rinne zur Bildung des Vorgangs, deren eine Längskante als Ueberlauf ausgebildet ist. Weiterhin können die vorhangbildenden Mittel siebartig (Giesskannenprinzip) ausgebildet sein und einen faden- oder tröpfchenförmigen Vorhang einreihig oder mehrreihig ausbilden. Wesentlich ist, dass in der evakuierten Zone das Verhältnis Oberfläche zu Volumen der eingespeisten Masse möglichst gross ist, damit Gaseinschlüsse möglichst leicht und vollständig entweichen können. Für Massen höherer Viskosität sind Breitschlitz- oder Siebdüsen zu bevorzugen, durch welche die Massen mit einem gewissen Ueberdruck ausgepresst werden können.

Es können auch zwei oder mehr der vorhangbildenden Mittel, insbesondere Breitschlitzdüsen, parallel zueinander eingesetzt werden. Damit kann bei Beibehaltung beliebig dünner Vorhänge die eindosierte Menge der Masse beliebig erhöht werden.

Die praktische Durchführung des Verfahrens wird nun an Hand einiger Ausführungsbeispiele erläutert; dabei wird im allgemeinen wie folgt vorgegangen: (Temperaturen sind in °C angegeben).

### Zubereitung eines Schmelzen-Master Batch: (Vormischung I)

Flüssigharz- und Flüssigadditivkomponenten werden im Kessel 4 bei etwa 90 bis 100° vorgelegt. Die festen Komponenten, vor allem Festharz und gegebenenfalls feste, schmelzbare Additive werden dann unter stetem Rühren eingegeben. Die geschmolzene Mischung wird dann bei 90 bis 110° homogenisiert und dabei bei einem reduzierten Druck von 40 mbar entgast.

### Zubereitung des Pulvergemischs: (Vormischung II)

Pulverförmige Festkomponenten, vor allem der Härter, Füllstoffe und gegebenenfalls Thixotropiermittel werden im Pflugscharmischer 12 bei Raumtemperatur (20°) gemischt.

### Herstellung des heißhärtbaren Verfahrensendprodukts:

Der Master Batch wird in geschmolzenem Zustand bei 60 bis 70° mit Hilfe der Differentialdosierwaage 7 und der Zahnradpumpe 14 durch die Leitung 34 in die bis auf einen Druck von 3O mbar evakuierte Einlasskammer 3O dosiert und fällt als Giessvorhang aus der Breitschlitzdüse 35 durch die Einlassöffnung 27 in die erste Einzugszone 16 des Extruders 15, in welchem er von den beiden Schnecken 33a und 33b erfasst und in Richtung zum Extruderauslass 2O hin befördert wird.

Das die Vormischung II bildende Pulvergemisch wird durch Dosierung mittels der zweiten Differentialdosierwaage 13 in die zweite Einzugszone 17 des Extruders 15 eingeführt, die in Förderrichtung stromab der ersten Einzugszone 16 (Einlaßkammer 30) liegt. Die sich im Extruder stromab der zweiten Einzugszone 17 bis zum Auslaß 20 erstreckende Entgasungszone wird bis zu einem Druck von 20 bis 30 mbar evakuiert. In ihr werden die Vormischungen intim gemischt.

Die Austragung des extrudierten Produkts erfolgt drucklos bei einer Temperatur von 55 bis 70°C aus dem Spritzkopf (Auslaß) 20 in an sich bekannter Weise in ein angeflanschtes Tauchrohr der Ableit- und Abfülleinrichtung 21 und in Gebinde 22 von unten her, so daß ein Eindringen von Luft in das Innere der Endproduktmasse im Gebinde vermieden wird.

Auch kann das die Vormischung II darstellende Pulvergemisch in zwei Hälften geteilt werden, von denen die erste Portion in die zweite Einzugszone 17 und die zweite Portion in eine dritte (nicht gezeigte) Einzugszone des Extruders 15 eingeführt wird, die sich zwischen der zweiten Einzugszone 17 und dem Spritzkopf 20 (Extruderauslaß) befindet. Während die Temperatur der Schmelze im Extruder 15 in dessen erster Einzugszone 16 etwa 110 bis 120°C betragen kann, liegt diejenige der im Extruder plastifizierten Masse in der zweiten Zone unterhalb der Härtungstemperatur, z.B. noch bei 90 bis 110°. Bei Vorhandensein einer dritten Einzugszone beträgt die Temperatur der Masse im Extruder in dieser Zone dann noch 70 bis 90°, um aus dem Spritzkopf, wie oben erwähnt, mit etwa 55 bis 70° auszutreten.

Bei Zubereitung der Vormischung II durch Mischen von Härter und Additiven, unter denen sich auch Flüssigkeitskomponenten befinden, müßte stattdes Pflugscharmischers ein Planetenmischer verwendet werden, es würde eine Paste erhalten, und bei Vorhandensein von nichtschmelzenden Additiven in der Vormischung I , z.B. Füllstoffen, ergäben sich Temperaturen von 130 bis 140° in der ersten, 110 bis 120° in der zweiten und 90 bis 100° in der dritten Einzugszone des Extruders, was die Wahl der bei diesen Temperaturen noch nicht aktivierten Härter sehr einschränkt und leicht zu einer unerwünschten, wenigstens teilweisen Vorhärtung des extrudierten Endprodukts führt.

Heißhärtbare, feste Endprodukte des Verfahrens nach der Erfindung werden zum Beispiel aus folgenden Komponenten nach der vorangehend beschriebenen Arbeitsweise erhalten:

### Beispiel 1

### Vormischung I aus:

- 5O Gew.teilen: eines festen Diglycidyläthers auf Bisphenol-A-Basis mit einem Epoxidgehalt von 1,6 Äquivalent/kg
- 15 Gew.teilen: eines Addukts aus carboxyl-terminiertem Acrylnitril/Butadien-Copolymer mit einem Acrylnitrilgehalt von 26 Gew.% und einer Säurezahl von 32 mg KOH/g und einem flüssigen Diglycidyläther auf Bisphenol-A-Basis mit einem Epoxidgehalt von 5,3 Äquivalent /kg, im Gewichtsverhältnis 7:8, (als Flexibilisator).

### Vormischung II aus:

- 4 Gew.teilen: Dicyandiamid, als Härter
- 28 Gew.teilen: Kreide, als Füllstoff
- 3 Gew.teilen: pyrogene Kieselsäure als Thixotropiermittel.

### Beispiel 2

### Vormischung I aus:

- 5O Gew.teilen: eines festen Diglycidyläthers auf Bisphenol-A-Basis mit einem Epoxidgehalt von 1,6 Äquivalent/kg
- 1O Gew.teilen: eines flüssigen Diglycidyläthers auf Bisphenol-A-Basis mit einem Epoxidgehalt von 5,3 Aequivalent/kg
- 10 Gew.teilen: des im Beispiel 1 verwendeten Flexibilisators.

### Vormischung II aus:

- 4 Gew.teilen: Dicyandiamid
- 22 Gew.teilen: Kreide
- 4 Gew.teilen: pyrogene Kieselsäure.

### Beispiel 3

### Vormischung I :

die gleiche wie in Beispiel 2

### Vormischung II aus:

- 4 Gew.teilen: Dicyandiamid
- 20 Gew.teilen: Kreide
- 4 Gew.teilen: pyrogene Kieselsäure
- 2 Gew.teilen: p-Chlorphenyldimethylharnstoff.

### Beispiel 4

### Vormischung I :

die gleiche wie in Beispiel 2

### Vormischung II aus:

- 4 Gew.teilen: Dicyandiamid
- 22 Gew.teilen: Kreide
- 2 Gew.teilen: pyrogene Kieselsäure
- 2 Gew.teilen: elektrisch leitfähigem Ruß (Ruß Corek L)

### Beispiel 5

### Vormischung I aus:

- 4O Gew. teilen: eines festen Diglycidyläthers auf Bisphenol-A-Basis mit einem Epoxidgehalt von 1,6 Aequivalent/kg
- 14 Gew.teilen: eines flüssigen Diglycidyläthers auf Bisphenol-A-Basis mit einem Epoxidgehalt von 5,3 Aequivalent/kg
- 10 Gew.teilen: des im Beispiel 1 verwendeten Flexibilisators.

### Vormischung II aus:

- 10 Gew.teilen: Isophthalsäure-dihydrazid
- 22 Gew.teilen: Kreide
- 4 Gew.teilen: pyrogene Kieselsäure.

### Beispiel 6

### Vormischung I aus:

- 45 Gew.teilen: eines festen Diglycidyläthers auf Bisphenol-A-Basis mit einem Epoxidgehalt von 2,6 Aequivalent/kg
- 1O Gew.teilen: eines flüssigen Diglycidyläthers auf Bisphenol-F-Basis mit einem Epoxidgehalt von 5,9 Aequivalent/kg
- 15 Gew.teilen: eines Flexibilisators bestehend aus dem Addukt von linearem Neopentylglycol-Sebacinsäure-Polyester mit endständigen Carboxylgruppen (Äquivalentgewicht 700) und Bisphenol A-diglycidyläther im Molverhältnis 1:2

### Vormischung II

die gleiche wie in Beispiel 5.

### Beispiel 7

### Vormischung I aus:

- 55 Gew.teilen: eines festen Diglycidyläthers auf Bisphenol-A-Basis mit einem Epoxidgehalt von 1,1 Aequivalent/kg
- 1O Gew.teilen: eines flüssigen Diglycidyläthers auf Bisphenol-A-Basis mit einem Epoxidgehalt von 5,3 Aequivalent/kg
- 5 Gew.teilen: eines Flexibilisators bestehend aus epoxidiertem Polypropylenglykol vom Molgewicht 1000 und einem Epoxidgehalt von 1,8 Äquivalent/kg

### Vormischung II:

die gleiche wie in Beispiel 5.

Das Verfahren nach der Erfindung bietet gegenüber den bekannten Verfahren eine Anzahl wichtiger Vorteile. So verlangt die Herstellung der beiden Vormischungen I und II nur einen Rührkessel oder dergleichen Behälter für die Zubereitung der bei erhöhter Temperatur flüssigen Vormischung I und einen Trommelmischer zur Herstellung der pulverförmigen Vormischung II , sowie für jede der beiden Mischungen eine besondere Dosierwaage zum Einführen der betreffenden Vormischung in den gemeinsamen Extruder. Jede der beiden Mischungen ist für sich nicht reaktiv und unbeschränkt lagerfähig. Inhärente Risiken sind bei dem erfindungsgemäßen Verfahren auf ein Minimum reduziert.

Die flüssige Vormischung I besitzt eine geringere Viskosität, als dies bei pastenförmigen Vormischungen bisher der Fall war, und weist ein annähernd newtonisches Fließverhalten auf. Dies gestattet, die Extrusion bei niedrigerer Temperatur zu fahren. Auch kann die bei erhöhter Temperatur flüssige Vormischung I problemlos gehandhabt und dosiert werden. Bei der Zubereitung der Vormischung I kann die Festharzkomponente (a) auch einen Schmelzpunkt oberhalb der Härtungstemperatur aufweisen, wobei allerdings ohnedies ein Abkühlen der ersten Vormischung I etwas unter die Schmelztemperatur der Mischung, wie es auf dem Wege zum Extruder vorkommen kann, niemals zu einer Entmischung bzw. teilweisen Erstarrung der Schmelze führen darf. Durch das Verfahren nach der Erfindung können heißhärtbare Harz/Härterformulierungen, vor allem auch solche mit klebriger Oberfläche, also besonders Reaktiv-Schmelzkleber, hergestellt werden, die sowohl hoch reaktiv als auch hochviskos sind und die unter Duroplastbildung durch Erhitzen voll ausgehärtet werden können.

## Patentansprüche

1. Verfahren zur Herstellung einer heisshärtbaren, schmelzbaren Mischung, vorzugsweise einer bei Raumtemperatur festen, zur Bildung von Duroplast befähigten Mischung, insbesondere eines Reaktiv-Schmelzklebers, bei dem aus Komponenten der Mischung im voraus einige Vormischungen vorbereitet werden, die anschliessend in einem Extruder (15) zusammengemischt werden,
**gekennzeichnet durch**
(A) Zubereiten einer ersten Vormischung (I) durch direktes Einführen von
(a) bei Raumtemperatur fester, vorzugsweise pulverförmiger, mittels festem, bei Raumtemperatur nicht aktivem Härtungsmittel bei Erhitzen auf eine bestimmte Härtungstemperatur unter Duroplastbildung aushärtbarer und in einem sich von etwas unterhalb bis oberhalb der Härtungstemperatur erstreckenden Schmelztemperaturbereich unzersetzt schmelzender Festharzkomponente und
(b) mindestens einer nicht mit der Festharzkomponente (a) reagierenden, vorzugsweise flüssigen Additivkomponente,
in eine Mischzone (4), in der die in der ersten Vormischung (I) enthaltene Komponente (a) geschmolzen und mit (b) innig vermischt wird, wobei das Mengenverhältnis der Komponenten so festgelegt wird, dass bei der Mischtemperatur die Viskosität im Bereich von 5OOO bis 1OO OOO mPa.s, vorzugsweise 1O OOO bis 3O OOO mPa.s liegt;
(B) Zubereiten einer zweiten Vormischung (II) durch direktes inniges Vermischen von
(i) festem, pulverförmigem, zur Härtung aller in der ersten Vormischung (I) anwesenden Harzkomponenten geeignetem, bei Raumtemperatur nicht aktivem, hitzeaktivierbarem Härter, sowie von mindestens einer der folgenden festen, pulverförmigen Additiv-Komponenten:
(ii) Härtungsbeschleuniger;
(iii) Füllstoff, gegebenenfalls auch Thixotropiermittel und/oder Additive zur Erteilung elektrischer Leitfähigkeit.
(C) Einleiten der aus der in der Mischzone (4) erhaltenen, vorzugsweise auf einer Temperatur unterhalb der Härtungstemperatur sich befindlichen, die erste Vormischung (I) darstellenden Schmelze unter Vermeiden von Lufteinschlüssen in eine Extrudierzone (16,17,18), in welcher die Schmelze zum Ausgangsende (20) der Zone gefördert wird;
(D) Eingeben der pulverförmigen zweiten Vormischung (II) in die Extrudierzone (16,17,18) in die der sich unterhalb der Härtungstemperatur befindlichen Schmelze, vorzugsweise in die sich zum Ausgangsende (20) hin bewegende Schmelze, in solchem Mengenverhältnis, dass der Gehalt an zweiter Vormischung (II) im das Ausgangsende (20) der Extrudierzone (16,17,18) verlassenden Endprodukt mindestens 1O bis höchstens 5O, vorzugsweise 2O bis 35 Gew.-% beträgt.

2. Verfahren zur Herstellung einer heisshärtbaren, schmelzbaren Mischung, vorzugsweise einer bei Raumtemperatur festen, zur Bildung von Duroplast befähigten Mischung, insbesondere eines Reaktiv-Schmelzklebers, bei dem aus Komponenten der Mischung im voraus einige Vormischungen vorbereitet werden, die anschliessend in einem Extruder (15) zusammengemischt werden, gekennzeichnet durch
(A) Zubereiten einer ersten Vormischung durch direktes Einführen von
(a) bei Raumtemperatur fester, vorzugsweise pulverförmiger, mittels festem, bei Raumtemperatur nicht aktivem Härtungsmittel bei Erhitzen auf eine bestimmte Härtungstemperatur unter Duroplastbildung aushärtbarer und in einem sich von etwas unterhalb bis oberhalb der Härtungstemperatur erstreckenden Schmelztemperaturbereich unzersetzt schmelzender Festharzkomponente,
und mindestens einer der folgenden Komponenten, von denen mindestens eine bei Raumtemperatur flüssig ist und jede feste solcher zusätzlichen Komponenten in dem oben genannten Temperaturbereich schmelzbar ist, wobei bei Raumtemperatur flüssige Komponenten nur in solcher Menge zugesetzt werden, daß das Endprodukt aus der ersten Vormischung (I) und der folgenden zweiten Vormischung (II) bei Raumtemperatur fest ist;
(b) bei Raumtemperatur flüssige, unter denselben Bedingungen wie die vorgenannte Festharzkomponente aushärtbare, mit der letzteren duroplastbildende Flüssigharzkomponenten;
(c) die Zähigkeit und Schlagfestigkeit eines aus dem Endprodukt durch Erhitzen gebildeten, vollständig ausgehärteten Produkts erhöhende Flexibilisierungskomponenten;
(d) Haftvermittlerkomponenten;
(e) Weichmacherkomponenten;
in eine Mischzone (4), in der die erste Vormischung (I) durch Erhitzen geschmolzen und innig vermischt wird;
(B) Zubereiten einer zweiten Vormischung (II) durch direktes inniges Vermischen von
(1) festem, pulverförmigen, zur Härtung aller in der Vormischung (I) anwesenden Harzkomponenten geeignetem bei Raumtemperatur nicht aktivem, hitzeaktivierbarem Härter, sowie von mindestens einer der folgenden festen, pulverförmigen Additivkomponenten;
(2) Härtungsbeschleuniger;
(3) Thixotropiermittel, um dem Endprodukt Thixotropie zu verleihen;
(4) Leitfähigkeitskomponenten, die dem Endprodukt elektrische Leitfähigkeit erteilen;
(5) nicht thixotropierende oder leitfähig machende Füllstoffe;
(C) Einleiten der aus der in der Mischzone (4) erhaltenen, vorzugsweise auf einer Temperatur unterhalb der Härtungstemperatur befindlichen, die erste Vormischung (I) darstellenden Schmelze unter Vermeiden von Lufteinschlüssen in eine Extrudierzone (16,17,18), in welcher die Schmelze zum Ausgangsende (20) der Zone gefördert wird;
(D) Eingeben der pulverförmigen zweiten Vormischung (II) in die Extrudierzone (16,17,18) in die sich unterhalb der Härtungstemperatur befindlichen Schmelze, vorzugsweise in die sich zum Ausgangsende (20) hin bewegende Schmelze, in solchem Mengenverhältnis, dass der Gehalt an zweiter Vormischung (II) im das Ausgangsende (20) der Extrudierzone (16,17,18) verlassenden Endprodukt mindestens 1O bis höchstens 5O, vorzugsweise 2O bis 35 Gew.-% beträgt.

3. Verfahren nach Anspruch 1 oder 2, dadurch gekennzeichnet, daß die Verweilzeit der Schmelze in der Extrudierzone (16,17,18) hochstens 5, vorzugsweise 2 bis 3 Minuten beträgt.

4. Verfahren nach einem der vorangehenden Ansprüche, dadurch gekennzeichnet, daß die Festharzkomponente aus mindestens einem Epoxidharz besteht.

5. Verfahren nach Anspruch 4, dadurch gekennzeichnet, dass die Epoxidharzkomponente mindestens einen festen Diglycidylether auf Bisphenol Basis, insbesondere einen festen Diglycidylether auf Basis von Bisphenol A, auf Basis von bromiertem Bisphenol A oder auf Basis von Bisphenol F, oder einen glycidylisierten Novolak, insbesondere einen Novolak auf Basis von Phenol und Formaldehyd oder auf Basis von Kresol und Formaldehyd enthält.

6. Verfahren nach Anspruch 2, dadurch gekennzeichnet, daß die als Schmelze vorliegende erste Vormischung (I) bei Temperaturen unterhalb der Härtungstemperatur gießfähig ist.

7. Verfahren nach Anspruch 6, dadurch gekennzeichnet, daß die erste Vormischung (I) im gießfähigen Zustande mittelviskos ist.

8. Verfahren nach einem der vorangehenden Ansprüche, dadurch gekennzeichnet, daß die zweite Vormischung (II) rieselfähig ist.

9. Verfahren nach Anspruch 3, dadurch gekennzeichnet daß die Temperatur der Mischung in der Extrudierzone (16,17,18) bei 60 bis 80°, vorzugsweise um 70°C gehalten wird, und die Extrusion vorzugsweise kontinuierlich erfolgt.

10. Verfahren nach einem der vorangehenden Ansprüche, dadurch gekennzeichnet, daß die erste Vormischung (I) eine Viskosität von etwa 15 OOO bis 20 OOO mPa.s aufweist.

11. Verfahren nach einem der vorangehenden Ansprüche, dadurch gekennzeichnet, daß die Härtungstemperatur etwa 1OO bis 2OO°C beträgt.

12. Verfahren nach einem der vorangehenden Ansprüche, dadurch gekennzeichnet, daß die Oberfläche des Endprodukts klebrig ist.

13. Verfahren nach einem der vorangehenden Ansprüche, dadurch gekennzeichnet, dar das Abfüllen des den Extruder (15) verlassenden Endprodukts in Gebinde (22) durch Einführen in die Bodenenden der Gebinde (22), diese von unten nach oben füllend unter Vermeidung des Eindringens von Luft in das Innere des Endprodukts im Gebinde (22) sowie unter Vermeidung von Wärmestaus in der eingefüllten Masse des Endprodukts erfolgt.

14. Verfahren nach einem der Ansprüche 2 bis 13, dadurch gekennzeichnet, daß keine der Vormischungen (I) und (II) bei Raumtemperatur für sich reaktiv ist.

15. Verfahren nach einem der vorangehenden Ansprüche, dadurch gekennzeichnet, daß die erste Vormischung (I) ein newtonisches Fliessverhalten aufweist.

16. Verfahren nach einem der vorangehenden Ansprüche, dadurch gekennzeichnet, daß das Endprodukt ein hochreaktives und gleichzeitig vorzugsweise hochviskoses Harz/Härtersystem darstellt.

17. Verfahren nach einem der vorangehenden Ansprüche, dadurch gekennzeichnet, daß das Einleiten der die erste Vormischung (I) darstellenden Schmelze in die Extrudierzone (16,17,18) in Gestalt eines dünnen Vorhanges erfolgt, der sich vorzugsweise quer zur Förderrichtung der Schmelze durch die Extrudierzone (16,17,18) erstreckt.

18. Verfahren nach einem der vorangehenden Ansprüche, dadurch gekennzeichnet, daß die erste Vormischung bei Dosiertemperatur eine Viskosität von 5000 bis 50 000 mPa.s aufweist.

19. Anlage zur Herstellung einer heisshärtbaren, schmelzbaren Mischung, vorzugsweise einer bei Raumtemperatur festen, zur Bildung von Duroplast befähigten Mischung, insbesondere eines Reaktiv-Schmelzklebers, welche einen Extruder (15) mit einer rotierbaren Extruderschnecke mit wenigstens einem Einlass (19) für zu mischende Komponenten der Mischung und mit einem Auslass (20) für die extrudierte Mischung umfasst,
**gekennzeichnet durch**
(a) einen mit einem Rührwerk (5) und einer Temperaturregulierung (6) zum Einstellen und Halten eines bestimmten Temperaturbereichs versehenen Behälters (4) zur Aufnahme und zum Schmelzen von festen in Mischung mit flüssigen Komponenten,
(b) eine erste, an den Behälter (4) nachgeschaltet angeschlossene Dosierwägeeinrichtung (7) für Schmelzen,
(c) eine Mischvorrichtung (12) für das Vermischen fester, pulverförmiger Komponenten zur Bildung einer weitgehend homogenen Pulvermischung,
(d) eine an die Mischvorrichtung (12) angeschlossene zweite Dosierwägeeinrichtung (13) für Pulvermischungen,
(e) einen Doppelschneckenextruder, mit einer luftdichten Einlasskammer (3O) mit Anschluss (17) an die erste Dosierwägeeinrichtung (7), einem Einlass (19) fuhr Pulvermischungen, und einem Auslass (2O) für extrudiertes Endprodukt; und
(f) Luftabschlußeinrichtungen (24,34) zur Verhinderung des Eindringens von Luft in die Schmelze auf dem Wege vom Behälter (4) zum Extruder (15) und in das durch den letzteren beförderte Gut, vorzugsweise umfassend eine Vakuumpumpvorrichtung (26) zum Evakuieren mindestens der Einlaßkammer (3O) und von freien Räumen im Inneren des Extruders (15).

20. Anlage nach Anspruch 19, gekennzeichnet durch
(g) eine Ableit- und Einfülleinrichtung (21) für extrudiertes Endprodukt, die einerseits an den Auslaß (20) des Extruders (15) und andererseits an Gebinde (22) in solcher Weise anschließbar ist, daß beim Einfüllen des Endprodukts in die Gebinde ein Eindringen von Luft in die Masse des Endprodukts im Gebinde verhindert wird.

21. Anlage nach Anspruch 19, gekennzeichnet durch eine Extrudereinlaßkammer (30) mit luftdichter Wandung (31); einem am unteren Ende der Kammer befindlichen Durchlaß (27) für schmelzförmiges Produkt in das Innere eines mit einer sich in Förderrichtung längs einer Schneckenachse (S) erstreckenden Schneckenvorrichtung (33) versehenen, an die Kammer anschließbaren Extruders (15); einem durch die Kammerwandung (31) in das Kammerinnere reichenden, an seinem darin befindlichen Ende eine Auslaßdüse (35) tragenden Einlaßrohr (34) für das schmelzförmige Produkt; und einem in der Kammerwandung (31) vorgesehenen Anschluß (37) für eine Vakuumpumpvorrichtung (26).

22. Anlage nach Anspruch 21, dadurch gekennzeichnet, daß die Auslaßdüse (35) eine Breitschlitzdüse ist, deren Schlitz (36) sich vorzugsweise quer zur Schneckenachse (S) erstreckt.

## Claims

1. A process for manufacturing a heat-hardenable meltable mixture, especially a mixture that is solid at room temperature and is capable of forming thermosetting resin, especially a reactive-hot melt adhesive, wherein several pre-mixtures are prepared in advance from components of the mixture and are then mixed together in an extruder (15),
which process comprises
(A) preparing a first pre-mixture (I) by directly introducing
(a) a solid resin component that is solid, preferably pulverulent, at room temperature and is hardenable with the formation of thermosetting resin by heating to a determined hardening temperature with the aid of a solid hardening agent that is inactive at room temperature, said solid resin component melting undecomposed in a melting temperature range extending from slightly below to above the hardening temperature and
(b) at least one additive component that is inert relative to the solid resin component (a) and is preferably liquid,
into a mixing zone (4) wherein the component (a) contained in the first pre-mixture (I) is melted down and intimately mixed with (b), the proportions of the components being such that, at the mixing temperature, the viscosity of the mixture is in the range of from 5000 to 100 000 mPa.sec, preferably from 10 000 to 30 000 mPa.sec;
(B) preparing a second pre-mixture (II) by directly intimately mixing
(i) a solid pulverulent hardening agent suitable for hardening all resin components present in the first pre-mixture (I) and being inactive at room temperature and heat-activatable, as well as at least one of the following solid pulverulent additive components:
(ii) a hardening accelerator; and
(iii) a filler; where appropriate also thixotropic agents and/or additives for imparting electrical conductivity;
(C) introducing the melt constituting the first premixture (I) obtained in the mixing zone (4) and being preferably at a temperature below the hardening temperature, into an extruding zone (16, 17, 18) while avoiding occlusions of air, in which extruding zone the melt is conveyed toward the exit end (20) of the zone; and
(D) introducing into the extruding zone (16, 17, 18), into the melt which is below the hardening temperature, preferably into the melt moving toward the exit end (20), the pulverulent second pre-mixture (II) in such proportion that the content of the second pre-mixture (II) in the end product leaving the exit end (20) of the extruding zone (16, 17, 18) amounts to at least 10 to at most 50, preferably 20 to 35, percent by weight.

2. A process for manufacturing a heat-hardenable meltable mixture, especially a mixture that is solid at room temperature and is capable of forming thermosetting resin, especially a reactive-hot melt adhesive, wherein several pre-mixtures are prepared in advance from components of the mixture and are then mixed together in an extruder (15),
which process comprises
(A) preparing a first pre-mixture by directly introducing
(a) a solid resin component that is solid, preferably pulverulent, at room temperature and is hardenable with the formation of thermosetting resin by heating to a determined hardening temperature with the aid of a solid hardening agent that is inactive at room temperature, said solid resin component melting undecomposed in a melting temperature range extending from slightly below to above the hardening temperature and
at least one of the following components of which at least one is liquid at room temperature and any additional solid component is meltable in the temperature range defined above, while any components that are liquid at room temperature are added only in such an amount that the end product resulting from the first pre-mixture (I) and the following second pre-mixture (II) is solid at room temperature;
(b) liquid resin components that are liquid at room temperature and hardenable under the same conditions as the solid resin component defined above and that form thermosetting resins therewith;
(c) flexibilizing components that augment the ductility and impact strength of a completely hardened product formed by heating from the end product;
(d) adhesion-promoting components; and
(e) plasticizing components;
into a mixing zone (4) wherein the first pre-mixture (I) is melted down by heating and intimately mixed;
(B) preparing a second pre-mixture (II) by directly intimately mixing
(1) a solid pulverulent hardening agent suitable for hardening all resin components present in the pre-mixture (I) and being inactive at room temperature and heat-activatable, as well as at least one of the following solid pulverulent additive components:
(2) a hardening accelerator;
(3) thixotropic agents for imparting thixotropy to the end product;
(4) conductivity components imparting electrical conductivity to the end product;
(5) fillers that do not impart either thixotropy or electrical conductivity;
(C) introducing the melt constituting the first pre-mixture (I) obtained in the mixing zone (4) and being preferably at a temperature below the hardening temperature, into an extruding zone (16, 17, 18) while avoiding occlusions of air, in which extruding zone the melt is conveyed toward the exit end (20) of the zone; and
(D) introducing into the extruding zone (16, 17, 18), into the melt which is below the hardening temperature, preferably into the melt moving toward the exit end (20), the pulverulent second pre-mixture (II) in such proportions that the content of the second pre-mixture (II) in the end product leaving the exit end (20) of the extruding zone (16, 17, 18) amounts to at least 10 to at most 50, preferably 20 to 35, percent by weight.

3. A process according to either claim 1 or claim 2, wherein the residence time of the melt in the extruding zone (16, 17, 18) is at most 5, preferably 2 to 3, minutes.

4. A process according to any one of the preceding claims, wherein the solid resin component consists of at least one epoxy resin.

5. A process defined in claim 4, wherein the epoxy resin component comprises at least one solid bisphenol-based diglycidyl ether, especially a solid diglycidyl ether that is bisphenol A-based, brominated bisphenol A-based or bisphenol F-based, or a glycidylized novolak, especially a novolak based on phenol and formaldehyde or on cresol and formaldehyde.

6. A process according to claim 2, wherein the first pre-mixture (I), in the form of a melt, is pourable at temperatures below the hardening temperature.

7. A process according to claim 6, wherein the first pre-mixture (I) is of medium-range viscosity while in the pourable state.

8. A process according to any one of the preceding claims, wherein the second pre-mixture (II) is in a free-flowing state.

9. A process according to claim 3, wherein the temperature of the mixture in the extruding zone (16, 17, 18) is kept at 60 to 80°C, preferably about 70°C, and the extrusion is preferably continuous.

10. A process according to any one of the preceding claims, wherein the viscosity of the first pre-mixture (I) is about 15 000 to 20 000 mPa.sec.

11. A process according to any one of the preceding claims, wherein the hardening temperature is about 100 to 200°C.

12. A process according to any one of the preceding claims, wherein the surface of the end product is tacky.

13. A process according to any one of the preceding claims, wherein receptacles (22) are filled with the end product leaving the extruder (15) by introducing the end product into the bottom ends of the receptacles (22) and filling the latter from the bottom upwards, while avoiding the penetration of air into the interior of the end product in the receptacle (22) and while avoiding accumulations of heat in the introduced mass of end product.

14. A process according to any one of claims 2 to 13, wherein neither of the pre-mixtures (I) and (II) is reactive per se at room temperature.

15. A process according to any one of the preceding claims, wherein the first pre-mixture (I) has a Newtonian flow behaviour.

16. A process according to any one of the preceding claims, wherein the end product is a highly reactive and at the same time preferably highly viscous resin/hardener system.

17. A process according to any one of the preceding claims, wherein the melt constituting the first pre-mixture (I) is introduced into the extruding zone (16, 17, 18) as a thin curtain that extends preferably transversely to the direction of conveyance of the melt through the extruding zone (16, 17, 18).

18. A process according to any one of the preceding claims, wherein the first pre-mixture has a viscosity at the dosing temperature of from 5000 to 50 000 mPa.sec.

19. A plant for manufacturing a heat-hardenable meltable mixture, especially a mixture that is solid at room temperature and is capable of forming thermosetting resin, especially a reactive-hot melt adhesive, comprising an extruder (15) having a rotary extruder screw with at least one inlet (19) for components of the mixture that are to be mixed and an outlet (20) for the extruded mixture,
and comprising
(a) a container (4), equipped with a stirrer (5) and a temperature control (6) for adjusting and maintaining a determined temperature range, for accommodating and melting down solid components in admixture with liquid components;
(b) a first dosing scales unit (7) for melts, connected to the container (4), downstream thereof;
(c) a mixing unit (12) for mixing solid pulverulent components to form a substantially homogeneous powder mixture;
(d) a second dosing scales unit (13) for powder mixtures, connected to the mixing unit (12);
(e) a double-screw extruder equipped with an air-tight inlet chamber (30), connecting means (17) for connecting to the first dosing scales unit (7), an inlet (19) for powder mixtures, and an outlet (20) for extruded end product; and
(f) air-exclusion means (24, 34) for preventing the penetration of air into the melt on its travel from the container (4) to the extruder (15) and into the material being conveyed thereby; the air-exclusion means preferably comprising vacuum pump means (26) for evacuating at least the inlet chamber (30) and free spaces occurring in the interior of the extruder (15).

20. A plant according to claim 19, comprising
(g) a delivery-and-feed unit (21) for extruded end product, being connectable to the outlet (20) of the extruder (15) on the one hand, and to receptacles (22) on the other hand, in a manner such that, during the introduction of the end product into the receptacle, the penetration of air into the mass of end product in the receptacle is prevented.

21. A plant according to claim 19, comprising an extruder inlet chamber (30) having air-tight walls (31); a through-passage (27) for product in melt form, located at the lower end of the chamber and opening into the interior of an extruder (15) connectable to the chamber and provided with a screw-assembly (33) extending along a screw axis (S) in the conveying direction; an inlet tube (34) for product in melt form, which tube extends through the chamber wall (31) into the interior of the chamber, and has a discharge nozzle (35) at its end inside the chamber; and connecting means (37), provided in the chamber wall (31), for vacuum pump means (26).

22. A plant according to claim 21, wherein the discharge nozzle (35) is a slit die of which the slit (36) extends preferably transversely to the screw axis (S).

## Revendications

1. Procédé de préparation d'un mélange fusible, thermodurcissable, de préférence un mélange solide à la température ambiante, approprié pour la formation d'une résine thermodurcissable, en particulier une colle à fusion réactive, procédé dans lequel on prépare à l'avance, à partir des composants du mélange, un certain nombre de prémélanges, que l'on réunit ensuite dans une extrudeuse (15),
caractérisé par les étapes consistant à :
(A) préparer un premier prémélange (I) par introduction directe de :
(a) un composant de résine solide, de préférence pulvérulent, solide à la température ambiante, durcissant, à l'aide d'un agent durcisseur inactif à la température ambiante, par chauffage à une température de durcissement déterminée, en formant une résine thermodurcissable, et pouvant fondre sans se décomposer dans une gamme de températures de fusion comprises entre une température légèrement inférieure à la température de durcissement et une température supérieure à celle-ci, et
(b) au moins un additif, de préférence liquide, ne réagissant pas avec le composant de résine solide (a),
dans une zone de mélange (4) dans laquelle le composant (a), contenu dans le premier prémélange (I), est fondu et mélangé intimement avec (b), le rapport de mélange des composants étant déterminé de façon qu'à la température de mélange, la viscosité se situe dans la gamme de 5000 à 100 000 mPa·s, de préférence 10 000 à 30 000 mPa·s ;
(B) préparer un second prémélange (II), par mélange intime direct de :
(i) un agent durcisseur solide, pulvérulent, adapté au durcissement de tous les composants de résine présents dans le premier prémélange (I), activable à la chaleur, inactif à la température ambiante, ainsi qu'au moins un des additifs pulvérulents solides suivants :
(ii) un accélérateur de durcissement ;
(iii) une charge, éventuellement également un agent thixotrope et/ou des additifs pour conférer une conductivité électrique ;
(C) introduire la masse fondue correspondant au premier prémélange (I), obtenue dans la zone de mélange (4), se trouvant de préférence à une température inférieur à la température de durcissement, en évitant d'y inclure de l'air, dans une zone d'extrusion (16,17,18) dans laquelle la masse fondue est transportée jusqu'à l'extrémité d'évacuation (20) de la zone ;
(D) introduire le second prémélange (II) pulvérulent, dans la zone d'extrusion (16,17,18), dans la masse fondue se trouvant à une température inférieure à la température de durcissement, de préférence dans la masse fondue se déplaçant jusqu'à l'extrémité d'évacuation (20), dans un rapport en poids tel que, à l'extrémité d'évacuation (20) de la zone d'extrusion (16,17,18), la proportion du second prémélange (II) dans le produit final soit comprise entre au moins 10 et au plus 50, de préférence entre 20 et 35 % en poids.

2. Procédé de préparation d'un mélange fusible, thermodurcissable, de préférence un mélange solide à la température ambiante, approprié pour la formation d'une résine thermodurcissable, en particulier une colle à fusion réactive, dans lequel on prépare à l'avance, à partir des composants du mélange, un certain nombre de prémélanges, que l'on réunit ensuite dans une extrudeuse (15), procédé caractérisé par les étapes consistant à :
(A) préparer un premier prémélange, par introduction directe de :
(a) une composant de résine solide, de préférence pulvérulent, solide à la température ambiante, durcissant, à l'aide d'un agent durcisseur inactif à la température ambiante, par chauffage à une température de durcissement déterminée, en formant une résine thermodurcissable, et pouvant fondre sans être décomposé dans une gamme de températures de fusion comprises entre une température légèrement inférieure à la température de durcissement et une température supérieure à celle-ci,
et au moins un des composants suivants, parmi lesquels au moins un est liquide à la température ambiante, et chaque composant solide supplémentaire est fusible dans la gamme de températures mentionnée ci-dessus, les composants liquides à la température ambiante étant ajoutés en une proportion telle que le produit final, constitué du premier prémélange (I) et du second prémélange (II) ci-après, soit solide à la température ambiante ;
(b) des composants de résine liquides, qui sont liquides à la température ambiante, durcissant dans les mêmes conditions que les composants de résine solides mentionnés précédemment, formant avec ces derniers une résine thermodurcissable ;
(c) un composant flexibilisant, élevant la viscosité et la résistance au choc d'un produit complètement durci, formé par chauffage à partir du produit final ;
(d) des composants à rôle d'adjuvant d'adhérence ;
(e) des émolliants ; dans une zone de mélange (4) dans laquelle le premier prémélange (I) est fondu par chauffage et mélangé intimement ;
(B) préparer un second prémélange (II) en mélangeant intimement directement :
(1) un durcisseur solide, pulvérulent, approprié pour le durcissement de tous les composants de résine présents dans le prémélange (I), activable à la chaleur, inactif à la température ambiante, ainsi qu'au moins un des additifs solides, pulvérulents suivants :
(2) un accélérateur de durcissement ;
(3) un agent thixotrope, destiné à conférer de la thixotropie au produit final ;
(4) des composants de conductivité, qui confèrent au produit final une conductivité électrique ;
(5) des charges ne conférant ni thixotropie ni conductivité ;
(C) introduire la masse fondue correspondant au premier prémélange (I), obtenue dans la zone de mélange (4), se trouvant de préférence à une température inférieure à la température de durcissement, en évitant d'y inclure de l'air, dans une zone d'extrusion (16,17,18) dans laquelle la masse fondue est transportée jusqu'à l'extrémité d'évactuation (20) de la zone ;
(D) introduire le second prémélange (II) pulvérulent, dans la zone d'extrusion (16,17,18), dans la masse fondue se trouvant à une température inférieure à la température de durcissement, de préférence dans la masse fondue qui se déplace vers l'extrémité d'évacuation (20), dans un rapport en poids tel que la proportion du second prémélange (II) dans le produit final quittant la zone d'extrusion (16,17,18), à l'extrémité d'évacuation (20) de celle-ci, soit comprise entre au moins 10 et au plus 50, de préférence entre 20 et 35 % en poids.

3. Procédé selon la revendication 1 ou 2, caractérisé en ce que le temps de séjour de la masse fondue dans la zone d'extrusion (16,17,18) est d'au plus 5, de préférence de 2 à 3 minutes.

4. Procédé selon l'une quelconque des revendications précédentes, caractérisé en ce que le composant de résine solide est constitué d'au moins une résine époxyde.

5. Procédé selon la revendication 4, caractérisé en ce que le composant de résine époxyde contient au moins éther de diglycidyle solide à base de bisphénol, en particulier un éther de diglycidyle solide à base de bisphénol A, à base de bisphénol A bromé ou à base de bisphénol F, ou une résine novolaque glycidylisée, en particulier une résine novolaque à base de phénol et de formaldéhyde ou à base de crésol et de formaldéhyde.

6. Procédé selon la revendication 2, caractérisé en ce que le premier prémélange (I), se trouvant sous forme de masse fondue, est fluide aux températures inférieures à la température de durcissement.

7. Procédé selon la revendication 6, caractérisé en ce que le premier prémélange (I), à l'état fluide, présente une viscosité moyenne.

8. Procédé selon l'une quelconque des revendications précédentes, caractérisé en ce que le second prémélange (II) est fluide.

9. Procédé selon la revendication 3, caractérisé en ce que la température du mélange dans la zone d'extrusion (16,17,18) est maintenue entre 60 et 80°C, de préférence à environ 70°C, et que l'extrusion est réalisée de préférence en continu.

10. Procédé selon l'une quelconque des revendications précédentes caractérisé en ce que le premier prémélange (I) présente une viscosité d'environ 15 000 à 20 000 mPa·s.

11. Procédé selon l'une quelconque des revendications précédentes, caractérisé en ce que la température de durcissement est comprise entre environ 100 et 200°C.

12. Procédé selon l'une quelconque des revendications précédentes caractérisé en ce que la surface du produit final est poisseuse.

13. Procédé selon l'une quelconque des revendications précédentes, caractérisé en ce que, pour évacuer le produit final de l'extrudeuse (15) dans un fût (22), on l'introduit au fond du fût (22), remplit celui-ci depuis le bas vers le haut en évitant l'infiltration d'air l'intérieur du produit final dans le fût (22), ainsi qu'en évitant l'accumulation de chaleur dans la masse du produit final chargé dans ce fût.

14. Procédé selon l'une quelconque des revendications 2 à 13, caractérisé en ce qu'aucun des prémélanges (I) et (II) n'est réactif à la température ambiante.

15. Procédé selon l'une quelconque des revendications précédentes, caractérisé en ce que le premier prémélange (I) est un fluide newtonien.

16. Procédé selon l'une quelconque des revendications précédentes, caractérisé en ce que le produit final représente un système résine/durcisseur ayant une réactivité élevée et simultanément, de préférence, une viscosité élevée.

17. Procédé selon l'une quelconque des revendications précédentes, caractérisé en ce que l'introduction de la masse fondue correspondant au premier prémélange (I) dans la zone d'extrusion (16,17,18) s'effectue en un rideau mince, qui s'étend de préférence perpendiculairement au sens d'avancement de la masse fondue à travers la zone d'extrusion (16,17,18).

18. Procédé selon l'une quelconque des revendications précédentes, caractérisé en ce que le premier prémélange présente, à la température d'introduction, une viscosité de 5 000 à 50 000 mPa·s.

19. Dispositif pour la préparation d'un mélange fusible, thermodurcissable, de préférence un mélange solide à la température ambiante, approprié pour la formation d'une résine thermodurcissable, en particulier une colle à fusion réactive, comprenant une extrudeuse (15) munie d'une vis d'extrusion rotative, comportant au moins un orifice d'introduction (19) pour les composants du mélange et un orifice d'évacuation (20) pour le mélange extrudé,
caractérisé en ce qu'il comprend :
(a) un récipient (4), muni d'un agitateur (5) et d'un dispositif de régulation de température (6) pour ajuster et maintenir une gamme de températures définie, destiné à la réception et à la fusion des composants solides en mélange avec les composants liquides,
(b) une première balance (7), disposée en aval du récipient (4), pour peser la masse fondue,
(c) un dispositif mélangeur (12) pour mélanger les composants pulvérulents solides, afin de former un mélange pulvérulent essentiellement homogène,
(d) une seconde balance (13), raccordée au dispositif mélangeur (12), pour peser les mélanges pulvérulents,
(e) une extrudeuse à double vis, comprenant une chambre d'admission (30) étanche à l'air, avec une conduite (17) de raccordement à la première balance (7), un conduit d'admission (19) pour les mélanges pulvérulents et un conduit d'évacuation (20) pour le produit extrudé final ; et
(f) des dispositifs d'exclusion d'air (24,34) pour empêcher l'infiltration de l'air dans la masse fondue sur le trajet allant du récipient (4) jusqu'à l'extrudeuse (15), et dans le produit transporté à travers cette dernière, comprenant de préférence un dispositif de pompe à vide (26) pour faire le vide au moins dans la chambre d'admission (30) et dans les espaces vides à l'intérieur de l'extrudeuse (15).

20. Dispositif selon la revendication 19, caractérisé en ce qu'il comprend :
(g) un dispositif d'évacuation et d'introduction (21) pour le produit final extrudé, qui peut être raccordé d'une part à l'évacuation (20) de l'extrudeuse (15) et d'autre part, au fût (22), de telle façon que lors du remplissage du fût par le produit final, l'infiltration de l'air dans la masse du produit final se trouvant dans le fût soit empêchée.

21. Dispositif selon la revendication 19, caractérisé en ce qu'il comprend une chambre d'admission d'extrudeuse (30) ayant des parois (31) étanches à l'air ; un passage (27) se trouvant à l'extrémité inférieure de la chambre, pour le produit fondu à l'intérieur d'une extrudeuse (15) disposée à la suite de la chambre, munie d'un dispositif de vis (33) s'étendant le long d'un axe de vis (S); un conduit d'admission (34) pénétrant, à travers la paroi (31) de la chambre, à l'intérieur de la chambre, portant à son extrémité une buse d'évacuation (35) pour le produit fondu, à l'intérieur de la chambre ; et un conduit de raccordement (37) prévu dans la paroi (31) de la chambre pour un dispositif de pompe à vide (26).

22. Dispositif selon la revendication 21, caractérisé en ce que la buse d'évacuation (35) est une buse à fente large, dont la fente (36) s'étend de préférence perpendiculairement à l'axe de vis (S).
